# FASCICULE DE BREVET EUROPEEN

(11) **EP 1 538 306 B1**
(45) Date de publication et mention de la délivrance du brevet: **06.01.2010**
(21) Numéro de dépôt: 04292637.8
(22) Date de dépôt: 08.11.2004
(51) Int. Cl.: F01D 11/00

(54) **Dispositif de liaison entre un distributeur et son enceinte d'alimentation de fluide de refroidissement dans une turbomachine**
Bindungsvorrichtung zwischen einer Leitschaufel und ihrer Kühlmittelkammer in einer Turbomaschine
Joining device between a vane and its cooling fluid supply in a turbomachine

(30) Priorité: 17.11.2003 FR 0313390
(43) Date de publication de la demande: 08.06.2005
(73) Titulaire: SNECMA, 75015 Paris (FR)
(72) Inventeur: Soupizon, Jean-Luc, 77530 Vaux le Penil (FR); Imbourg, Sébastien Alain, 91330 Yerres (FR); Pabion Philippe Jean-Pierre, 77000 Vaux le Penil (FR)
(74) Mandataire: Ramey, Daniel

(56) Documents cités:
- EP-A- 0 860 587
- EP-A- 0 890 710
- EP-A- 1 164 250
- EP-A- 1 209 324
- US-B1- 6 443 694

## Description

La présente invention concerne un dispositif de liaison entre un distributeur et une enceinte d'alimentation d'au moins un injecteur de fluide de refroidissement dans une turbomachine, telle qu'un turboréacteur ou un turbopropulseur d'avion.

Le document EP-A-0 890 710 décrit un système de refroidissement d'une aube mobile d'une turbine à gaz.

Dans les turbomachines, les injecteurs peuvent être disposés radialement à l'intérieur et à l'extérieur par rapport aux distributeurs, et des enceintes d'alimentation des injecteurs avec des dispositifs de liaison aux distributeurs peuvent également être disposées radialement à l'intérieur et à l'extérieur par rapport aux distributeurs.

Les dispositifs de liaison connus sont formés par des douilles cylindriques qui sont engagées à leurs extrémités dans des orifices de parois du distributeur et des enceintes d'alimentation et qui peuvent coulisser dans ces orifices (voir par exemple le document US-B1-6,443,694). Des moyens de retenue axiale sont prévus pour empêcher ces douilles de sortir de ces orifices et sont formés d'une part par un évasement d'une extrémité des douilles et par un flasque intermédiaire monté dans l'enceinte d'alimentation sous distributeur, en ce qui concerne les douilles montées dans les chambres internes, et d'autre part par l'utilisation de circlips qui nécessitent, pour leur fixation, l'usinage d'une rainure annulaire à l'intérieur d'une douille intermédiaire logée dans la paroi de l'enceinte d'alimentation sur distributeur et dans laquelle une partie du dispositif de liaison est engagée, en ce qui concerne les douilles montées dans les chambres externes.

Ces dispositifs de formes multiples augmentent le risque d'erreur quant au choix du bon dispositif de liaison à monter sur la turbomachine, et ne permettent pas d'optimiser les coûts de fabrication des dispositifs. De plus, chaque pièce supplémentaire de forme différente est une nouvelle référence qui doit être gérée en termes par exemple : de durée telle que la durée de fabrication ou de transport, de disponibilité par exemple la disponibilité des pièces en stock pour la réalisation ou l'entretien des turbomachines, ou bien en termes de qualité qu'il est nécessaire de surveiller pour répondre aux cahiers des charges strictes que connaît le domaine de l'aéronautique. La gestion de chaque nouvelle pièce est coûteuse.

En outre, les contraintes de masse et de coût auxquelles doivent répondre les turbomachines, imposent aux constructeurs de réaliser des dispositifs de liaison et des moyens de blocage des mouvements axiaux de ces dispositifs qui sont à la fois simples, légers et peu coûteux. La technique connue pour répondre aux contraintes précitées consiste à réaliser la retenue axiale du dispositif de liaison en direction du rotor de la turbomachine à l'aide d'un flasque intermédiaire à l'intérieur de l'enceinte d'alimentation sous distributeur, qui sert également à préserver l'étanchéité de l'enceinte d'alimentation. Ce flasque intermédiaire est conformé pour présenter une surface d'appui destinée à contacter l'extrémité axiale du dispositif de liaison du côté du rotor de la turbomachine.

Bien que cette technique de blocage soit très simple, elle présente l'inconvénient de réduire la section transversale de l'enceinte d'alimentation au niveau du débouché du dispositif de liaison à l'intérieur de l'enceinte d'alimentation. Cette réduction provoque sur le débit de gaz sortant du dispositif de liaison des pertes de charge importantes. Ces pertes de charges diminuent la pression d'alimentation des injecteurs et par conséquent la qualité de l'injection qui doit être réalisée à haute pression.

En outre, l'utilisation d'un flasque intermédiaire pour former une butée axiale alourdit l'enceinte d'alimentation et augmente par conséquent le rapport masse/puissance de la turbomachine que l'on cherche toujours à diminuer.

Un but de l'invention est d'éviter les inconvénients précités et d'apporter une solution, techniquement simple et peu coûteuse, aux problèmes de retenue axiale des dispositifs de liaison entre distributeurs et enceintes d'alimentation des injecteurs tout en diminuant les pertes de charge à l'intérieur des enceintes d'alimentation sous distributeur.

L'invention propose à cet effet un dispositif comportant un distributeur et une enceinte d'alimentation d'au moins un injecteur de fluide de refroidissement dans une turbomachine, et au moins une douille montée coulissante par ses extrémités axiales ouvertes dans des orifices d'une paroi du distributeur et d'une paroi de l'enceinte d'alimentation, et des moyens de retenue axiale de la douille, où lesdits moyens de retenue comprennent des moyens de butée formés par une collerette annulaire externe faisant saillie sur une surface cylindrique externe de la douille entre les extrémités axiales de la douille et à distance de ces extrémités, cette collerette étant disposée entre la paroi du distributeur et la paroi de l'enceinte d'alimentation et étant destinée à venir en butée sur ces parois pour empêcher la douille de sortir des orifices de ces parois.

Par l'expression « retenue axiale de la douille », il faut comprendre la retenue de la douille dans une direction parallèle à son axe de révolution.

Une caractéristique intéressante de la douille selon l'invention est qu'elle peut être réalisée intégralement et en une seule pièce par usinage ou par déformation mécanique, par exemple par hydroformage ou par emboutissage.

Dans un autre mode de réalisation selon l'invention, la douille est formée par un élément tubulaire sur lequel est rapportée et fixée une rondelle annulaire formant la collerette précitée.

Dans une variante de réalisation de l'invention, la douille est constituée par deux éléments comprenant chacun un rebord annulaire à une extrémité, les deux rebords annulaires étant appliqués l'un sur l'autre et fixés l'un à l'autre, par exemple par brasure, pour former la collerette annulaire précitée de la douille.

Selon une autre caractéristique de l'invention, la collerette annulaire s'étend radialement depuis la surface cylindrique externe de la douille à environ égale distance des deux extrémités axiales de la douille.

La douille peut alors être de forme symétrique par rapport à un plan médian passant par la collerette annulaire pour éviter, par exemple, toute erreur de positionnement de la douille lors de son assemblage sur la turbomachine.

Les éléments tubulaires permettant de former la douille peuvent être réalisés par usinage, déformation plastique, hydroformage, emboutissage ou fluotournage.

Un avantage de l'invention est d'utiliser les mêmes douilles pour établir une liaison entre le distributeur et une enceinte d'alimentation sous distributeur, disposée radialement à l'intérieur du distributeur, et pour établir une liaison entre le distributeur et une enceinte d'alimentation sur distributeur, disposée radialement à l'extérieur du distributeur.

Le montage coulissant des douilles dans les orifices des parois du distributeur et de l'enceinte d'alimentation permet de réduire les contraintes mécaniques auxquelles ces douilles sont soumises du fait de leurs dilatations thermiques et de celles des éléments environnants, en fonctionnement.

Le dispositif de liaison selon l'invention est de fabrication simple et permet d'éviter la réalisation, aux niveaux des extrémités axiales de la douille, de moyens spécifiques et supplémentaires dédiés aux blocage de la douille dans ses deux directions axiales. En effet, avec cette douille que l'on peut facilement retenir par sa collerette médiane, il n'est plus nécessaire d'une part de former une surface d'appui sur le flasque intermédiaire servant à préserver l'étanchéité de l'enceinte d'alimentation, et d'autre part il n'est pas non plus nécessaire d'usiner une rainure annulaire pour fixer un circlip dans la douille intermédiaire, nécessaire à la rétention axiale de la douille.

Le flasque intermédiaire qui était jusqu'alors nécessaire pour former l'appui axial de la douille peut être remplacé par une garniture élastique d'étanchéité de forme annulaire, montée dans l'enceinte d'alimentation entre un bord de l'orifice recevant la douille et une paroi arrière ou aval de l'enceinte.

Un avantage notable lié à la modification ou à la suppression du flasque intermédiaire est de diminuer les pertes de charge du gaz alimentant les injecteurs en évitant d'obstruer partiellement les débouchés des douilles dans l'enceinte d'alimentation des injecteurs.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue en coupe longitudinale schématique des dispositifs de liaison interne et externe selon la technique connue dans une turbomachine partiellement représentée ;
- la figure 2 est une vue à plus grande échelle d'une partie de la figure 1;
- la figure 3 est une vue à plus grande échelle d'une autre partie de la figure 1;
- la figure 4 est une vue en coupe longitudinale schématique d'un premier mode de réalisation d'un dispositif de liaison selon l'invention;
- la figure 5 est une vue en coupe longitudinale schématique d'un deuxième mode de réalisation d'un dispositif de liaison selon l'invention ;
- la figure 6 est une vue correspondant à la figure 1, mais avec des dispositifs de liaison interne et externe selon l'invention;
- la figure 7 est une vue à plus grande échelle de la partie de la figure 6 comportant le dispositif de liaison interne selon l'invention.

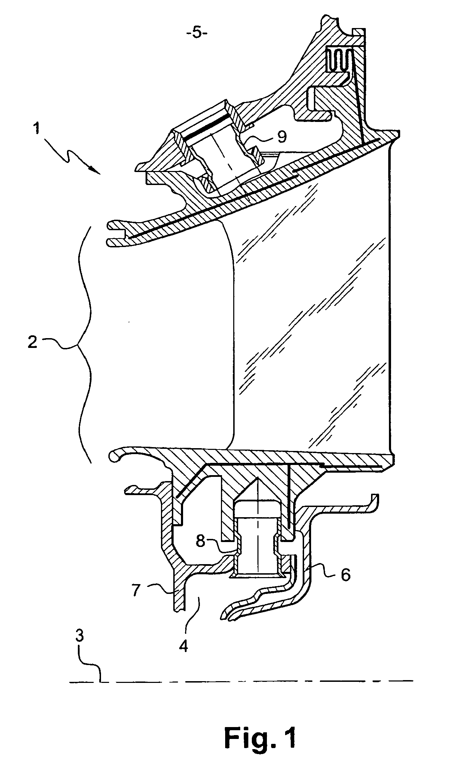

La figure 1 illustre la technique antérieure et est une vue partielle d'un étage de turbine dans un turboréacteur, représentant notamment un secteur de distributeur et deux enceintes d'alimentation d'injecteurs de fluide de refroidissement. L'ensemble du distributeur 2 forme dans le turboréacteur 1 un passage annulaire autour de l'axe de rotation 3 du rotor du turboréacteur 1. Une première enceinte 4 d'alimentation d'injecteurs (non représentés) est située radialement à l'intérieur du distributeur 2 et sera appelée enceinte d'alimentation sous distributeur 4 dans ce qui suit, et une deuxième enceinte 5 d'alimentation d'injecteurs (non représentés) est disposée autour et radialement à l'extérieur du distributeur 2 et sera appelée enceinte d'alimentation sur distributeur 5 dans ce qui suit. L'enceinte sous distributeur 4 comporte deux parois 6, 7 formées par un flasque arrière ou flasque aval 6 qui est positionné en aval par rapport au flux de gaz à l'intérieur du distributeur 2, et par un flasque avant ou flasque amont 7 qui est positionné en amont par rapport au flux de gaz à l'intérieur du distributeur 2.

Les enceintes d'alimentation 4, 5 sont reliées au distributeur 2 par des dispositifs de liaison 8, 9 tubulaires. Le flux de gaz circulant dans le distributeur 2 pénètre par les dispositifs de liaison 8, 9 dans les enceintes 4, 5 d'alimentation des injecteurs.

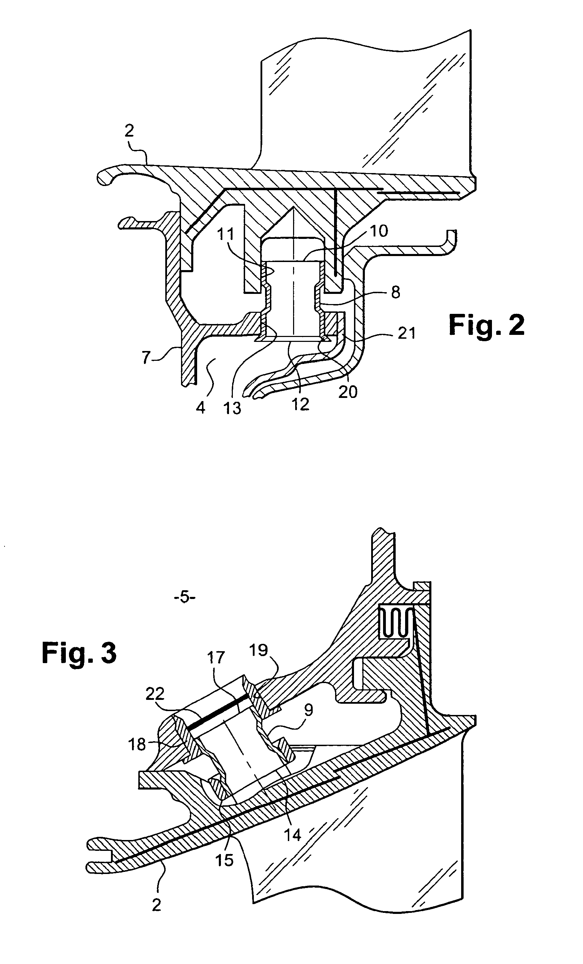

Le dispositif de liaison, mieux visible en figure 2, qui relie le distributeur 2 à l'enceinte d'alimentation sous distributeur 4, est formé par une douille 8 montée coulissante par l'une de ses extrémités axiales ouvertes 10 dans un orifice 11 d'une paroi du distributeur 2, et par son autre extrémité axiale ouverte 12 dans un orifice 13 d'un rebord annulaire du flasque amont 7 de l'enceinte d'alimentation sous distributeur 4.

Le dispositif de liaison, mieux visible en figure 3, qui relie le distributeur 2 à l'enceinte d'alimentation sur distributeur 5, est formé par une douille 9 montée coulissante par l'une de ses extrémités axiales ouvertes 14 dans une première douille intermédiaire 15 fixée dans un orifice formé dans une paroi du distributeur 2 et par son autre extrémité axiale ouverte 17 dans une deuxième douille intermédiaire 18 fixée dans un orifice 19 formé dans une paroi de l'enceinte d'alimentation sur distributeur 5.

Les douilles de liaison 8, 9 ont des moyens de retenue axiale différents et donc des formes différentes. Le moyen de retenue axiale de la douille 8 est constitué, dans la technique connue, par un évasement 20 formé à l'extrémité 12 de la douille qui peut venir en appui sur un flasque intermédiaire 21 monté dans l'enceinte d'alimentation sous distributeur 4. Le flasque intermédiaire 21 est monté de façon étanche sur le rebord du flasque amont 7 qui porte la douille 8. Le moyen de retenue axiale de la douille 9 est constitué, dans la technique connue, par un circlip 22, monté dans une gorge annulaire de la douille intermédiaire 18, la douille 9 ne présentant pas d'évasement à l'une de ses extrémités.

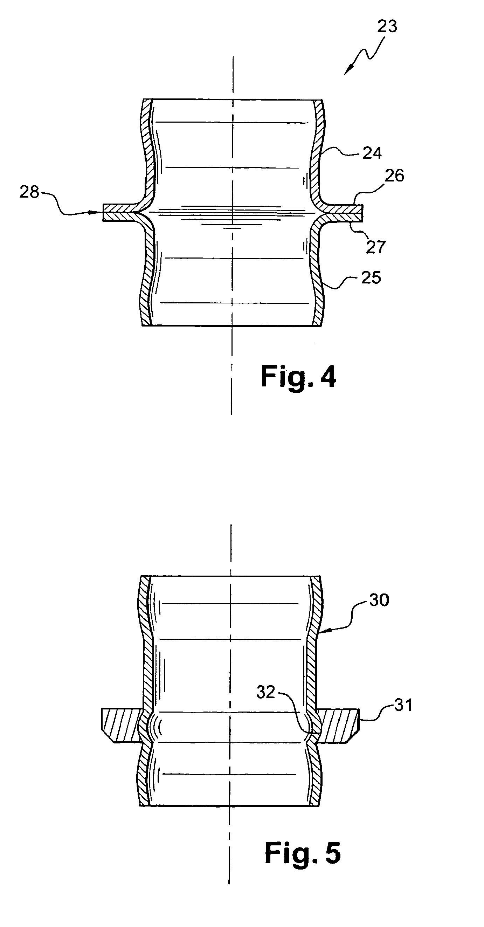

On se réfère maintenant à la figure 4 qui représente un premier mode de réalisation d'un dispositif de liaison selon l'invention, comprenant une douille 23 formée de deux éléments tubulaires 24, 25 identiques pouvant être obtenus par hydroformage, fluotournage ou emboutissage et comportant chacun à une extrémité axiale un rebord annulaire 26, 27. Pour former la douille 23, les deux éléments tubulaires 24, 25 sont accolés bout à bout et leurs rebords annulaires 26, 27 appliqués l'un sur l'autre sont réunis par brasage pour former une collerette annulaire 28 sur la douille 23.

La figure 5 représente un deuxième mode de réalisation d'un dispositif de liaison selon l'invention dans lequel une douille 30 cylindrique est déformée mécaniquement et fixée sur une rondelle annulaire 31 entourant la douille 30. Une déformation de la douille 30 située au niveau de la rondelle 31, par hydroformage ou déformation mécanique permet d'engager la matière de la douille 30 dans une rainure annulaire 32 formée dans la surface cylindrique interne de la rondelle 31.

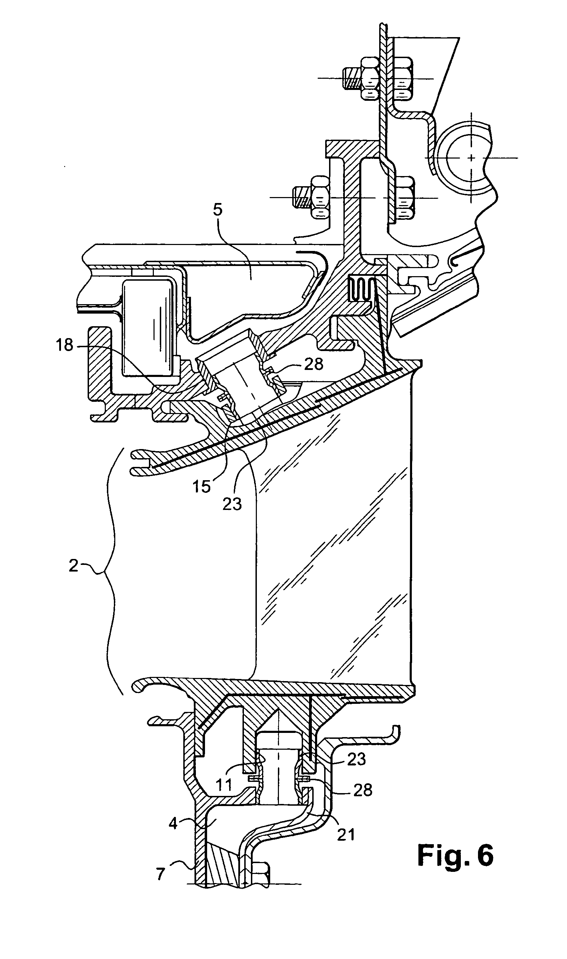

La figure 6 est une vue partielle d'un étage de turbine dans un turboréacteur, comportant les dispositifs de liaison selon l'invention, et représente notamment un secteur de distributeur et deux enceintes d'alimentation d'injecteurs de fluide de refroidissement. Les dispositifs de liaison 8, 9 de la technique antérieure, visibles aux figures 1, 2 et 3, ont été remplacés par les dispositifs de liaison suivant l'invention, dans lesquels la surface cylindrique externe de chaque douille 23 ou 30 comporte entre les extrémités axiales de la douille, une collerette annulaire 28 ou 31 qui s'étend radialement depuis la surface externe de la douille.

La douille externe 23 ou 30 est positionnée entre l'enceinte d'alimentation sur distributeur 5 et le distributeur 2 de sorte que la collerette 28 ou 31 est disposée entre la première douille intermédiaire 15 et la deuxième douille intermédiaire 18 précitées et peut venir en butée sur l'une et / ou l'autre de ces deux douilles intermédiaires 15, 18 en empêchant la douille 23 ou 30 de sortir des orifices dans lesquels elle est engagée, la dimension radiale des moyens de butée formés par la collerette 28 , 31 étant supérieure aux dimensions radiales des orifices dans lesquels la douille est engagée.

La douille interne 23 ou 30 est positionnée entre l'enceinte d'alimentation sous distributeur 4 et le distributeur 2 de sorte que la collerette 28 ou 31 est disposée entre l'orifice 11 formé dans la paroi du distributeur 2 et le rebord annulaire du flasque amont 7 de l'enceinte d'alimentation sous distributeur 4 et peut venir en butée sur le distributeur 2 et/ou sur ce rebord annulaire en empêchant la douille de sortir des orifices dans lesquels elle est montée coulissante.

La retenue axiale de la douille interne 23 ou 30 à l'aide de la collerette annulaire 28 ou 31 permet d'écarter le flasque intermédiaire 21 du débouché de la douille 23 ou 30 dans l'enceinte 4, et donc de réduire les pertes de charge à la sortie de la douille 23 ou 30.

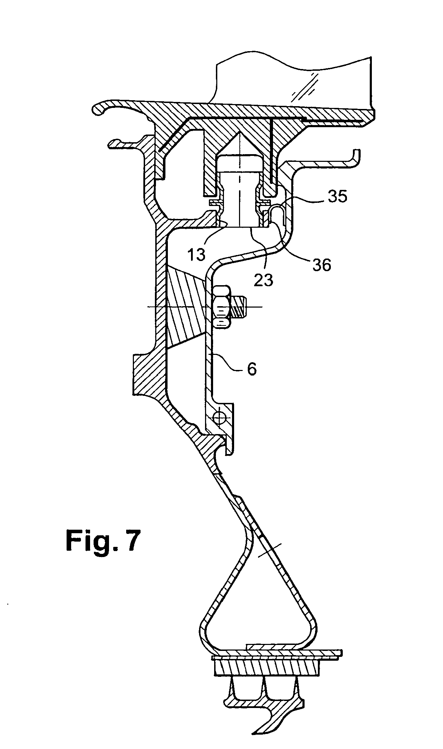

Il est également possible comme représenté en figure 7 de remplacer le flasque intermédiaire 21 par une garniture élastique d'étanchéité 35 de forme annulaire, montée dans l'enceinte d'alimentation sous distributeur 4 entre le bord 36 de l'orifice 13 recevant la douille 23 ou 30 et le flasque arrière ou aval 6. Cette garniture 35, simple, légère et peu coûteuse permet d'obtenir un grand volume de dégagement autour de la sortie de la douille 23 ou 30 et une bonne étanchéité de l'enceinte 4.

## Revendications

1. Dispositif comportant un distributeur (2) et une enceinte d'alimentation (4, 5) d'au moins un injecteur de fluide de refroidissement dans une turbomachine, et au moins une douille (23, 30) montée coulissante par ses extrémités axiales ouvertes dans des orifices d'une paroi du distributeur (2) et d'une paroi de l'enceinte d'alimentation (4, 5), et des moyens de retenue (28, 31) axiale de la douille, **caractérisé en ce que** lesdits moyens de retenue (28, 31) comprennent des moyens de butée formés par une collerette annulaire externe faisant saillie sur une surface cylindrique externe de la douille (23, 30) entre les extrémités axiales de la douille et à distance de ces extrémités, cette collerette étant disposée entre la paroi du distributeur et la paroi de l'enceinte d'alimentation et étant destinée à venir en butée sur ces parois pour empêcher la douille de sortir des orifices de ces parois.

2. Dispositif selon la revendication 1, **caractérisé en ce que** les moyens de butée (28, 31) ont une dimension radiale supérieure à celles des orifices dans lesquels les extrémités (10, 12, 14, 17) de la douille (23, 30) sont engagées.

3. Dispositif selon l'une des revendications 1 ou 2 **caractérisé en ce que** la douille (23, 30) est obtenue par usinage ou déformation mécanique.

4. Dispositif selon l'une des revendications 1 ou 2, **caractérisé en ce que** la douille (23) est constituée de deux éléments tubulaires (24, 25) comprenant chacun un rebord annulaire (26, 27) à une extrémité, les deux rebords annulaires (26, 27) étant appliqués l'un sur l'autre et fixés l'un à l'autre, par exemple par brasure, pour former la collerette annulaire (28) précitée de la douille (23).

5. Dispositif selon l'une des revendications 1 ou 2, **caractérisé en ce que** la douille (30) comprend un élément tubulaire sur lequel est rapportée et fixée une rondelle annulaire (31) formant la collerette précitée.

6. Dispositif selon l'une des revendications 1 à 5, **caractérisé en ce que** la douille (23, 30) établit une communication entre le distributeur (2) et une enceinte d'alimentation (4) disposée radialement à l'intérieur du distributeur.

7. Dispositif selon l'une des revendications 1 à 5, **caractérisé en ce que** la douille (23, 30) établit une communication entre le distributeur (2) et une enceinte d'alimentation (5) disposée radialement à l'extérieur du distributeur.

8. Dispositif selon l'ensemble des revendications 6 et 7, **caractérisé en ce que** les douilles (23, 30) disposées radialement à l'extérieur et à l'intérieur du distributeur sont identiques.

9. Dispositif selon la revendication 7, **caractérisé en ce que** la douille (23, 30) est engagée dans une douille intermédiaire (18) fixée dans un orifice (19) formé dans une paroi de l'enceinte d'alimentation (5),.

10. Dispositif selon l'une des revendications 1 à 8, **caractérisé en ce que** l'extrémité (12) de chaque douille (23, 30) débouchant dans l'enceinte d'alimentation (4) est à distance de la paroi de l'enceinte (4).

11. Dispositif selon l'une des revendications 1 à 10, **caractérisé en ce qu'**une garniture élastique d'étanchéité (35) de forme annulaire est montée dans l'enceinte d'alimentation sous distributeur (4) entre le bord (36) de l'orifice (13) recevant la douille (23, 30) et le flasque arrière ou aval (6).

## Claims

1. A device comprising a nozzle (2) and a feed enclosure (4, 5) for feeding at least one cooling fluid injector in a turbomachine, and at least one bushing (23, 30) slidably mounted via its open axial ends in orifices in a wall of the nozzle (2) and in a wall of the feed enclosure (4, 5), and also retaining means (28, 31) for retaining the bushing axially, the device being **characterized in that** said retaining means (28, 31) comprise abutment means formed by an outer annular collar projecting from a cylindrical outer surface of the bushing (23, 30) between the axial ends of the bushing and at a distance from said ends, said collar being positioned between the nozzle wall and the feed enclosure wall and being intended to come into abutment against these walls for preventing the bushing from escaping from the orifices of these walls.

2. A device according to claim 1, **characterized in that** the abutment means (28, 31) are of radial size that is greater than the radial size of the orifices in which the ends (10, 12, 14, 17) of the bushing (23, 30) are engaged.

3. A device according to claim 1 or 2, **characterized in that** the bushing (23, 30) is obtained by mechanical deformation or machining.

4. A device according to claim 1 or 2, **characterized in that** the bushing (23) is made up of two tubular elements (24, 25) each having an annular rim (26, 27) at one end, the two annular rims (26, 27) being pressed one against the other and being united, e.g. by brazing, to form the above-specified annular collar (28) of the bushing (23).

5. A device according to claim 1 or 2, **characterized in that** the bushing (30) comprises a tubular element having an annular washer (31) forming the above-specified collar fitted thereon and secured thereto.

6. A device according to any one of claims 1 to 5, **characterized in that** the bushing (23, 30) establishes communication between the nozzle (2) and a feed enclosure (4) disposed radially inside the nozzle.

7. A device according to any one of claims 1 to 5, **characterized in that** the bushing (23, 30) establishes communication between the nozzle (2) and a feed enclosure (5) disposed radially outside the nozzle.

8. A device according to claims 6 and 7 taken together, **characterized in that** the bushings (23, 30) disposed radially outside and radially inside the nozzle are identical.

9. A device according to claim 7, **characterized in that** the bushing (23, 30) is engaged in an intermediate bushing (18) fixed in an orifice (19) formed in a wall of the feed enclosure (5).

10. A device according to any one of claims 1 to 8, **characterized in that** the end (12) of each bushing (23, 30) opening out into the feed enclosure (4) is far enough away from the wall of the enclosure (4).

11. A device according to any one of claims 1 to 10, **characterized in that** an elastic sealing gasket (35) of annular shape is mounted in the under-nozzle feed enclosure (4) between the edge (36) of the orifice (13) feeding the bushing (23, 20) and the rear or downstream plate (6).

## Patentansprüche

1. Vorrichtung mit einem Verteiler (2) und einer Kammer (4, 5) zur Versorgung wenigstens eines Kühlmittelinjektors in einer Turbomaschine und wenigstens einer Buchse (23, 30), die mit ihren offenen axialen Enden in Öffnungen einer Wand des Verteilers (2) und einer Wand der Versorgungskammer (4, 5) gleitend angebracht ist, sowie Mitteln (28, 31) zum axialen Halten der Buchse, **dadurch gekennzeichnet, dass** die Haltemittel (28, 31) Anschlagmittel aufweisen, die durch einen äußeren ringförmigen Kragen gebildet sind, der an einer äußeren zylindrischen Fläche der Buchse (23, 30) zwischen den axialen Enden der Buchse und im Abstand von diesen Enden vorspringt, wobei dieser Kragen zwischen der Wand des Verteilers und der Wand der Versorgungskammer angeordnet und dazu bestimmt ist, an diesen Wänden in Anschlag zu kommen, um zu verhindern, dass die Buchse aus den Öffnungen dieser Wände tritt.

2. Vorrichtung nach Anspruch 1, **dadurch gekennzeichnet, dass** die Anschlagmitttel (28, 31) eine größere radiale Abmessung als diejenigen der Öffnungen haben, in welchen die Enden (10, 12, 14, 17) der Buchse (23, 30) in Eingriff stehen.

3. Vorrichtung nach einem der Ansprüche 1 oder 2, **dadurch gekennzeichnet, dass** die Buchse (23, 30) durch Bearbeitung oder mechanische Verformung erhalten ist.

4. Vorrichtung nach einem der Ansprüche 1 oder 2, **dadurch gekennzeichnet, dass** die Buchse (23) aus zwei rohrförmigen Elementen (24, 25) besteht, die jeweils einen ringförmigen Rand (26, 27) an einem Ende aufweisen, wobei die zwei ringförmigen Ränder (26, 27) aneinander angesetzt und aneinander befestigt sind, z.B. durch Hartlötung, um den obengenannten ringförmigen Kragen (28) der Buchse (23) zu bilden.

5. Vorrichtung nach einem der Ansprüche 1 oder 2, **dadurch gekennzeichnet, dass** die Buchse (30) ein rohrförmiges Element aufweist, an welchem eine ringförmige Scheibe (31) angefügt und befestigt ist, die den obengenannten Kragen bildet.

6. Vorrichtung nach einem der Ansprüche 1 bis 5, **dadurch gekennzeichnet, dass** die Buchse (23, 30) eine Verbindung zwischen dem Verteiler (2) und einer Versorgungskammer (4) herstellt, die radial im Inneren des Verteilers angeordnet ist.

7. Vorrichtung nach einem der Ansprüche 1 bis 5, **dadurch gekennzeichnet, dass** die Buchse (23, 30) eine Verbindung zwischen dem Verteiler (2) und einem Versorgungskammer (5) herstellt, die radial im Inneren des Verteilers angeordnet ist.

8. Vorrichtung nach der Gesamtheit der Ansprüche 6 und 7, **dadurch gekennzeichnet, dass** die radial außerhalb und innerhalb des Verteilers angeordneten Buchsen (23, 30) identisch sind.

9. Vorrichtung nach Anspruch 7, **dadurch gekennzeichnet, dass** die Buchse (23, 30) in einer Zwischenbuchse (18) in Eingriff steht, die in einer Öffnung (19) befestigt ist, welche in einer Wand der Versorgungskammer (5) ausgebildet ist.

10. Vorrichtung nach einem der Ansprüche 1 bis 8, **dadurch gekennzeichnet, dass** das Ende (12) jeder Buchse (23, 30), das in die Versorgungskammer (4) mündet, im Abstand von der Wand der Kammer (4) liegt.

11. Vorrichtung nach einem der Ansprüche 1 bis 10, **dadurch gekennzeichnet, dass** ein elastischer Dichtungseinatz (35) mit ringförmiger Gestalt in der Versorgungskammer (4) unter dem Verteiler zwischen dem Rand (36) der die Buchse (23, 30) aufnehmenden Öffnung (13) und dem hinteren oder stromabwärts gelegenen Flansch (6) angebracht ist.
